# EUROPEAN PATENT SPECIFICATION

(11) **EP 1 838 623 B1**
(45) Date of publication and mention of the grant of the patent: **07.01.2009**
(21) Application number: 05843705.4
(22) Date of filing: 19.12.2005
(51) Int. Cl.: C02F 1/28, B01J 20/32, B01J 20/08

(54) **FILTER MEDIA AND PROCESS TO PREPARE THE SAME**
FILTERMEDIEN UND HERSTELLUNGSVERFAHREN DAFÜR
MATIERES FILTRANTES ET PROCEDE POUR LES PREPARER

(30) Priority: 31.12.2004 IN MU14362004
(43) Date of publication of application: 03.10.2007
(73) Proprietor: Unilever N.V., 3013 AL Rotterdam (NL); Unilever PLC, London Greater London EC4P 4BQ (GB)
(72) Inventor: GUPTA, Romesh HINDUSTAN LEVER RESEARCH CENTRE, Andheri East, Mumbai 400 099 (IN); MAHAPATRA, Samiran HINDUSTAN LEVER RESEARCH CENTRE, Andheri East, Mumbai 400099 (IN); PAL, Sukdeb HINDUSTAN LEVER RESEARCH CENTRE, Andheri East, Mumbai 400 099 (IN); SHAH, Nimish, Harshadrai HINDUSTAN LEVER RESEARCH, Andheri East, Mumbai 400 099 (IN); SRIVASTAVA, Madalasa HINDUSTAN LEVER RESEARCH CNTR, Andheri East, Mumbai 400 099 (IN)
(74) Representative: Rosen Jacobson, Frans Lucas M.
(86) International application number: PCT/EP2005/013812
(87) International publication number: WO 2006/069712

(56) References cited:
- US-A- 5 369 072
- US-A- 5 616 243
- US-A- 5 911 882
- US-A- 6 113 792
- US-A1- 2003 196 966

## Description

### Technical Field

The invention relates to a process for filtering water to remove contaminants and make it safe for human consumption. Furthermore, the invention relates to filter media for use in filtration units capable of removing contaminants including dissolved organic material like pesticide and its residues and microorganisms like bacteria and virus from water thus making it safe for consumption. The invention also relates to processes for preparing the filter media.

### Background and Prior art

Water typically contains contaminants, which include suspended particulates, dissolved chemicals and microorganisms. If it is intended for human consumption, it is desirable to remove these contaminants from the water before consumption to maintain good health.

Several different methods are known for filtration of water and various devices and apparatus have been designed and are commercially available. These methods and devices vary depending on whether the application is for industrial use or for household use.

The suspended particulate impurities are generally removed using a sediment filter, which may be a woven or non-woven cloth. The dissolved impurities like organic compounds e.g humic substances, fulvic substances, dyes, fatty acids, carboxylates, hydrocarbons, amino acids, pesticide and pesticide residues are separated from the water by adsorption on granular or particulate adsorbents having high porosity, e.g. clay or activated carbon. Pathogenic organisms like bacteria and viruses have been traditionally eliminated either by boiling or by treatment with disinfectants e.g. halogens, halogenated chemicals like chlorinated or iodinated compounds. Boiling is a very effective way of killing the microorganisms. However, boiling requires a large amount of energy and is therefore expensive. Moreover, many people do not like the taste of boiled water. Disinfection using halogenated chemicals is also a very effective way of killing microorganisms, but the dosage of these chemicals has to be carefully controlled and the residual chemicals after disinfection have to be carefully removed. Some people find the smell and taste of chlorinated/ iodinated water to be offensive.

It is thus desirable to have a water purification system, which is capable of removing these impurities from potable water while minimising or eliminating the disadvantages mentioned above.

US 5 369 072 (Benjamin et al. 1994) describes a process for filtering water through a bed of a filter medium comprising a solid substrate with adsorbed thereon prehydrolized iron.

WO00/13764 (Lukasik et al. 2000) describes a method of filtering a fluid comprising the steps of in-situ precipitating at least one metallic (hydr)oxide onto the filter matrix; and bringing the filter matrix in contact with a fluid, wherein removal of at least one impurity from the fluid is enhanced by the application of the at least one metallic (hydr)oxide to the filter matrix. In this publication, metallic chlorides e.g. aluminium chloride or ferric chloride is applied on to a substrate e.g sand and the metallic hydroxide is precipitated on to the sand by applying a large excess of base solution e.g. ammonium hydroxide, at elevated temperatures, e.g. greater than 80°C. Thus, completely hydrolysed metallic hydroxides e.g aluminium hydroxide [Al(OH)₃ and Fe(OH)₃] being precipitated on to a substrate for filtration of water are taught by this publication.

US6630016 (Koslow Tech., 2003) describes a filter medium comprising a microporous structure comprising an array of active particles, said microporous structure having a mean flow path of less than about two microns; and a microbiological interception enhancing agent comprising a cationic material having a medium to high charge density and a molecular weight greater than 5000 daltons adsorbed on at least a portion of said microporous structure, and a biologically active metal in direct proximity to the cationic material and also on at least a portion of said microporous structure. A large list of cationic materials satisfying the above criteria are mentioned and are generally organic compounds e.g. amines, amides, quaternary ammonium salts, imides, benzalkonium compounds, biguanides, aminosilicon compounds and polymers thereof and combinations thereof.

US2004/0164018 (P&G, 2004) describes a filter for providing potable water comprising (a) a housing having an inlet and an outlet; and (b) a filter material disposed within said housing formed at least in part from a plurality of mesoporous activated carbon filter particles and particles selected from the groups consisting of mesoporous activated carbon filter particles coated entirely with a cationic polymer, mesoporous activated carbon filter particles partially coated with a cationic polymer, and mixtures thereof.

KR 2003066880 (Kwak et al) discloses a substrate for fixing and growing microorganisms comprising activated carbon powder fixed to a polyurethane sponge . The carbon powder is impregnated with an inorganic coagulant such as polyaluminium sulphate or chloride, poly-iron sulphate or chloride or other aluminium or iron salts. The substrate is used for treating waste water whereby the microorganisms absorb organic material.

JP 61133140 (Nippon Soda Co) discloses granules comprising a mixture of zeolite and up to 1% of polyaluminium chloride or aluminium sulphate. The granules are mixed with sewage water and collect suspended matter while sinking.

The processes described in the last two documents involve mixing the water to be treated with the substrate comprising the metal compound and require the additional step of separating the water from the substrate. Also, the water stays in contact with the substrate for an extended period of time: in the Korean patent for up to ten minutes or more.

### Summary and objects of the invention

It has now been found that filtration of contaminated water through a filter medium compring a solid substrate on which pre-hydrolyzed positively charged multivalent metallic species have been adsorbed said specied having a specific OH to metal ratio provides highly effective removal of microorganisms, dissolved organics and particulate impurities.

It is thus an object of the invention to provide a process for filtering water comprising passing the water through a bed of a filter medium comprising a solid substrate with absorbed thereon pre-hydrolyzed positively charged multivalent metallic species, thereby removing microorganisms, dissolved organics and particulate impurities, thus making it suitable for human consumption.

It is another object of the invention to provide improved filter media that are capable of removing microorganisms, dissolved organics and particulate impurities, and functions well, even over extended use.

### Detailed description of the Invention

Thus, according to one aspect of the invention there is provided a process for filtering water comprising passing the water through a bed of a filter medium comprising a solid substrate with absorbed thereon 1-20% by weight (of the filter medium) of pre-hydrolyzed positively charged multivalent metallic species being aluminium wherein said species has an OH to metal ratio between 0.5 and 3.

Preferred pre-hydrolyzed positively charged multivalent metallic species have a pH in the range of 4 to 8 in 1% (w/v) aqueous solution.

A pre-hydrolyzed positively charged multivalent metallic species is defined as a species wherein the hydrolysis ratio B = [OH]/[M] value is greater than 0 but less that the valency of the metal ion (M is the metal ion having a valency 'n'); i.e. 0<B>n. Pre-hydrolyzed positively charged multivalent metallic species having the desired B value can be prepared either
(i) by basifying (by addition of required/calculated amount of basifying agent) to a metal salt or
(ii) by acidifying (by addition of required/calculated amount of acidifying agent) a metal salt.

Pre-hydrolyzed positively charged multivalent metallic species are commercially available. Examples of suitable compounds are poly-aluminium chloride, aluminium chlorohydrate, poly-aluminium sulphate, aluminium chlorohydrate silicate, aluminium chlorohydrate sulphate, polyaluminium chlorosulphate, poly-aluminium silicate sulfate, poly-alumino-ferric sulphate, poly-aluminium-iron halides or basic poly-aluminium sulfate solution containing additional multivalent cations from the group of calcium, magnesium and zinc. The compounds most widely available and most suitable for this invention are aluminium chlorohydrate and poly-aluminium chloride. When the metal of the pre-hydrolyzed positively charged multivalent metallic species is aluminium, the following species are believed to be formed that have a OH/A1 ratio between 0.5 and 3

| Species | OH/Al ratio |
|---|---|
| AlOH²⁺ | 1.0 |
| Al(OH)₂⁺ | 2.0 |
| Al₂(OH)₂⁴⁺ | 1.0 |
| Al₂(OH)₂⁴⁺ | 1.0 |
| Al₃(OH)₄ ⁵⁺ | 1. 33 |
| Al₇(OH)₁₇⁴⁺ | 2.43 |
| Al₁₃(OH)₃₂⁷⁺ | 2.46 |
| Al₆(OH)₁₅³⁺ | 2.50 |
| Al₁₃ (OH)₃₄⁵⁺ | 2.62 |

(for simplicity water molecules and oxide ligands are omitted)

Of the above species, it has been observed that the species Al₁₃(OH)₃₂⁷⁺ which is known as the "Al₁₃" tridecamer with a formula Al₁₃O₄,(OH)₂₄(H₂O)₁₂⁷⁺ is the most dominant species.

The following articles give further details of.the chemistry of these species: (1) Bottero J.Y. et al., J. Phys. Chem. 1980, vol 84, page 2933-2939; (2) Bottero J.Y. et al., J. Colloid Interface. Sci. 1987, vol 117, page 47-57.

When the metal of the pre-hydrolyzed positively charged multivalent metallic species is aluminium, the preferred OH to metal ratio is between 2.3 and 2.7. In such a case, the preferred value of the pH of a 1%(w/v) solution of the species is between 4 and 8.

It is preferred that the pre-hydrolyzed positively charged multivalent metallic species is present in an amount in the range of 2 to 15%, more preferably 5 to 15% by weight of the filter medium.

The solid substrate as per this invention is particulate material chosen from sand, glass, silica, coal, activated carbon, diatomaceous earth, cellulose, resins, woven and non-woven cloth, aluminosilicates, clay or zeolite. The most preferred particulate material is activated carbon. The particulate material preferably has a particle size in the range of 50 to 1200 µm, more preferably at least 80% of said particulate material has a particle size in the range of 75 to 250 µm.

Although the filter medium could comprise a bed of activated carbon, it is preferred that the carbon particles are bound together into a block with the help of suitable binders. The binders are preferably polymeric and include polyethylene, polypropylene, polyester, resins, cellulose or mixtures thereof.

The efficiency of removal of microorganisms is improved when the filter medium additionally comprises a biocide. Preferred biocides include silver or its salts, polyethyleneimine and quaternary ammonium salts such as poly-diallyl-dimethyl-ammonium salts and cetyl-pyridinium chloride.

Accordingly, the invention also provides improved filter media comprising a solid substrate as described above with absorbed thereon 1-20% by weight (of the filter medium) of pre-hydrolyzed positively charged multivalent metallic species, wherein said species has an OH to metal ratio between 0.5 and 3, as described above, and additionally comprising a biocide, as described above.

A suitable process to prepare a filter medium with the pre-hydrolyzed positively charged multivalent metallic species on a solid substrate comprises the step of treating said solid substrate with an aqueous solution of a pre-hydrolyzed multivalent metal compound such that the ratio of the OH to metal in an aqueous solution of said compound is between 0.5 and 3. Optionally, the substrate is treated with said compound in the present of a base or an acid, preferably a base. Optionally, the substrate is thereafter treated with a solution of a biocide, preferably those described above.

According to another aspect of the invention there is provided a gravity fed water purification device comprising a sediment filter adapted to separate particulate material having a particle size greater than 3 microns and a filter medium comprising 1 to 20% by weight pre-hydrolyzed positively charged multivalent metallic species adsorbed on a solid substrate wherein said species has the OH to metal ratio between 0.5 and 3. In said device, the sediment filter may be a woven or non-woven fabric, preferably a non woven fabric.

The invention will now be illustrated with reference to the following non-limiting examples.

### Examples

### Removal of bacteria (E. Coli) using a bed of particulate activated carbon treated with aluminium chlorohydrate at various pH

### Example-1:

A batch of 100 g of activated carbon was taken in a beaker and 200 ml of distilled water was added to it so as to make a slurry. A 100 ml solution of 2.5% (w/v) aluminium chlorohydrate (sourced from Clariant, Germany) was prepared and slowly added to the carbon slurry with continuous stirring using an overhead stirrer. The pH of the slurry containing the carbon and aluminium chlorohydrate was measured to be 6. When carbon slurry pH was more than 6, it was brought down to 6 by addition of hydrochloric acid prior to the addition of aluminium chlorohydrate solution. The mixture was allowed to remain under stirring condition for at least 30 minutes after which the treated carbon was filtered in a buchner funnel under vacuum. The treated carbon was washed with atleast two liters of distilled water and finally kept for drying at temperature of 40-65°C. Higher temperature drying was avoided.

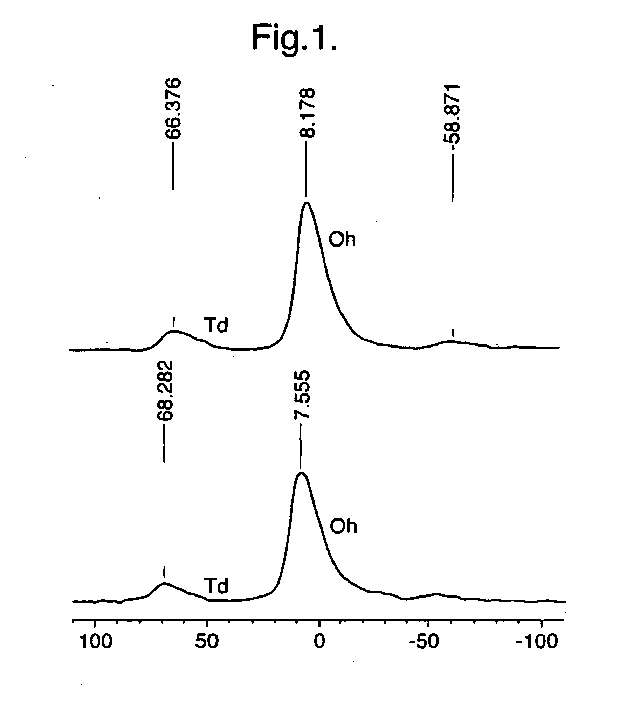

The presence of the "Al₁₃" species i.e. a tridecamer with a formula Al₁₃O₄(OH)₂₄(H₂O)₁₂⁷⁺ on the carbon particles was confirmed using solid state ²⁷Al NMR technique. The solid state ²⁷Al NMR spectra of aluminium chlorohydrate treated activated carbon is shown as Figure 1. The spectra clearly indicate the presence of the "Al₁₃" species. The characteristic ²⁷Al NMR spectrum of Al₁₃O₄.(OH)₂₄(H₂O)₁₂⁷⁺ displays the presence of two environments of aluminium, viz., the octahedral (Oh) signal at 5-10 ppm and the tetrahedral (Td) signal at -65 ppm..

### Comparative Example-A:

A bed of particulate activated carbon was prepared as described in Example-1 except that the pH of the aqueous solution/slurry was adjusted to 3 with the use of hydrochloric acid such that species with OH/Al ratio of 0.3 was prepared.

### Comparative Example-B:

A bed of particulate activated carbon was prepared as described in Example-1 except that the pH of the aqueous solution/slurry was adjusted to 9 with the use of sodium hydroxide such that species with OH/Al ratio of 3.0 was prepared.

### Comparative Example-C:

A bed of particulate activated carbon was prepared as described in Example-1 except that the pH of the aqueous solution/slurry was adjusted to 10 where it is believed that the species generated is Al(OH)₃ where the OH/Al ratio is 3.

Seven grams of particulate activated carbon (having a particle size of 75 to 250 microns) were packed in columns of 18 mm diameter and 60 mm height. Dechlorinated tap water was innoculated with 10⁷cfu/L of bacteria viz. E.Coli and 10 L of the same was passed through the column. Aliquots of output water were removed at 5L and 10 L and checked for *E.Coli.*

The removal efficiency of the bacteria was measured using the following test procedure:

*E.Coli* (ATCC 10536) was grown overnight on Tryptic Soya Agar plates at 37°C. Washed saline suspension of the above freshly grown culture was prepared at an OD₆₀₀ₙₘ of 0.8 (10⁸ cfu/ml). This was innoculated in 10 L of dechlorinated tap water so as to obtain a final concentration of 10⁴ cfu/ml contaminated water. The same contaminated water was passed through various columns and output water samples were collected at intervals of 5L and 10L in sterile containers. These samples were diluted 10 fold serially and were microbiologically analysed by Standard Pour Plate method on MacConkeys Agar medium. Results were recorded as cfu/ml after 24 to 48 hours of incubation at 37°C. The respective log reduction values were calculated per ml.

The results for the various beds are shown in Table-1.

**Table 1:**

| Example | OH/Al ratio | Vol of water passed (1) | Average log reduction/ml |
|---|---|---|---|
| Example-1 | 2.5 | 10 | 2.4 |
| Comparative Example - A | 0.3 | 10 | 2.0 |
| Comparative Example - B | 3 | 10 | 0.5 |
| Comparative Example-C | 3 | 10 | 0.4 |

The data in table-1 indicates that the particulate activated carbon treated with species having a OH/Metal ratio between 0.5 and 3 is able to remove bacteria vastly superior to those outside the limits.

### Example-2:

Thirty grams of a silver impregnated particulate activated carbon (sourced from Active Carbon Company, Hyderabad) was treated with 100 mL of 10% (w/v) aqueous solution of aluminium chlorohydrate using a process as described in Example-1. The carbon thus prepared was filled in a column of 30 mm diameter and 100 mm height. Dechlorinated tap water containing 10⁷ cfu/L of *E.Coli* was passed through the bed at a flow rate of about 100 to 120 ml/min. The efficiency of removal of *E.Coli* was checked over an extended period of time by passing large volumes of water (>1000L) through the bed and the data is summarized in Table-2.

### Comparative Example-D:

Thirty grams of the silver impregnated particulate activated carbon (sourced from Active Carbon Company, Hyderabad) was filled in a column and tested for removal of bacteria as described in Example-2. The data is summarized in Table-2.

**TABLE-2**

| Vol of water passed (1) | Example-2 Average log reduction | Comp. Example-D Average log reduction |
|---|---|---|
| 16 | 6.0 | 6.0 |
| 550 | 6.0 | 6.0 |
| 900 | 6.0 | 4.0 |
| 1150 | 6.0 | 5.0 |
| 1420 | 6.0 | 4.0 |

### Removal of (E. Coli) in an extended lifetime test using a bed of particulate activated carbon treated with aluminium chlorohydrate also comprising biocides viz. cetylpyridinium chloride, poly-diallyl-dimethyl-ammonium chloride.

### Example-3:

Fifty grams of a sample of particulate activated carbon was taken and treated with 10% (w/v) aqueous solution of aluminium chlorohydrate as per the process of Example-1. Cetyl-pyridinium chloride (CPC) was deposited on to the carbon particles using the process described below:

About 100 g of the dried carbon treated with aluminium chlorohydrate is wetted with 200 ml of water to prepare a slurry. 100 ml of 1% (w/v) solution of CPC is prepared and added to the aluminium chlorohydrate treated carbon slurry while stirring. The mixture was allowed to remain under stirring condition for at least 30 minutes after which the treated carbon was filtered in a buchner funnel under vacuum. The treated carbon was washed with atleast two liters of distilled water and finally kept for drying at temperature between 40 and 65°C. Higher temperature drying was avoided.

Extended lifetime testing of a bed of the carbon particles so prepared was conducted as per Example-2 and the data is summarized in Table-3.

**TABLE-3:**

| Vol of water passed (1) | Av. log reduction |
|---|---|
| 70 | 6.0 |
| 300 | 6.0 |
| 900 | 6.0 |

The data in table 3 indicates that carbon particles treated with species as per the invention, additionally having a biocide CPC is capable of removing bacteria from water over extended use.

### Example-4:

Fifty grams of a sample of particulate activated carbon was taken and treated with 100 mL of 10% (w/v) aqueous solution of aluminium chlorohydrate as per the process of Example-1. Poly-diallyl-dimethyl-ammonium chloride (PDADMAC) was deposited on to the carbon particles using the process as per Example-3.
Extended lifetime testing of a bed of the carbon particles so prepared was conducted as per Example-3 and the data is summarized in Table-4.

**TABLE-4**

| Vol of water passed (1) | Example-4: Av. log reduction |
|---|---|
| 10 | 6.0 |
| 200 | 6.0 |
| 340 | 6.0 |
| 480 | 4.0 |
| 575 | 5.0 |

The data in table 3 indicates that carbon particles treated with species as per the invention, additionally having a biocide PDADMAC is capable of removing bacteria from water over extended use, although the efficiency as not as good as when CPC or silver was used.

## Claims

1. A process for filtering water comprising passing the water through a bed of a filter medium comprising a solid substrate with absorbed thereon 1-20% by weight (of the filter medium) of pre-hydrolyzed positively charged multivalent metallic species being aluminium, wherein said species has an OH to metal ratio between 0.5 and 3, and wherein a 1% (w/v) aqueous solution of the said species has a pH in the range of 4 to 8.

2. A process as claimed in claim 1 wherein said species is obtained from poly-aluminium chloride, aluminium chlorohydrate, poly-aluminium sulphate, aluminium chlorohydrate silicate, aluminium chlorohydrate sulphate, poly-aluminium chlorosulphate, polyaluminium silicate sulfate, poly-alumino-ferric sulphate, polyaluminium-iron halides or basic poly-aluminium sulfate solution containing additional multivalent cations from the group of calcium, magnesium and zinc.

3. A process as claimed in claim 2 wherein said species is obtained as an aqueous solution of aluminium chlorohydrate or poly-aluminium chloride.

4. A process as claimed in claim 3 wherein said species has an OH to metal ratio between 2.3 and 2.7.

5. A process as claimed in any one of the preceding claims wherein the solid substrate is particulate material which has a particle size in the range of 50 to 1200 µm.

6. A process as claimed in claim 5 wherein at least 80% of said particulate material has a particle size in the range of 75 to 250 µm.

7. A process as claimed in any one of the preceding claims wherein the solid substrate is a particulate material chosen from sand, glass, silica, coal, activated carbon, diatomaceous earth, cellulose, resins, woven and non-woven cloth, aluminosilicates, clay or zeolite.

8. A process as claimed in claim 7 wherein the solid substrate is activated carbon.

9. A process as claimed in claim 8 wherein the filter medium has the form of a block comprising the activated carbon particulate material bonded with a binder material.

10. A process as claimed in claim 9 wherein the binder material is a polymer selected from polyethylene, polypropylene, polyester, resins, cellulose or a mixture thereof.

11. A process as claimed in any one of the preceding claims wherein the pre-hydrolysed positively charged multivalent metallic species is present in an amount in the range of 2 to 15% by weight of the filter medium.

12. A process as claimed in any one of the preceding claims wherein the filter medium comprises a biocide.

13. A process as claimed in claim 12 wherein the biocide is chosen from silver or its salts, polyethyleneimine and quaternary ammonium salts.

14. A filter medium comprising a solid substrate with absorbed thereon 1-20% by weight of pre-hydrolyzed positively charged multivalent metallic species being aluminium, wherein said species has an OH to metal ratio between 0.5 and 3 and additionally comprising a biocide, and wherein a 1% (w/v) aqueous solution of the said species has a pH in the range of 4 to 8.

15. A filter medium as claimed in claim 14 wherein the biocide is chosen from silver or its salts, polyethyleneimine and quaternary ammonium salts.

16. A filter medium as claimed in claim 14 wherein the quaternary ammonium salts is chosen from poly-diallyl-dimethyl-ammonium salts and cetyl-pyridinium chloride.

17. A gravity fed water purification device comprising
- a sediment filter adapted to separate particulate material having a particle size greater than 3 microns and
- a filter medium according to claim 14.

## Patentansprüche

1. Verfahren zum Filtrieren von Wasser, umfassend Durchleiten des Wassers durch ein Bett eines Filtermediums, das ein festes Substrat mit daran 1-20 Gewichts-% (des Filtermediums) an vorhydrolysierter, positiv geladener mehrwertiger metallischer Spezies, die Aluminium ist, absorbiert umfasst, wobei die Spezies ein Verhältnis von OH zu Metall zwischen 0,5 und 3 hat, und wobei eine 1 %ige (G/V) wässrige Lösung der Spezies einen pH im Bereich von 4 bis 8 hat.

2. Verfahren gemäß Anspruch 1, wobei die Spezies aus Polyaluminiumchlorid, Aluminiumchlorhydrat, Polyaluminiumsulfat, Aluminiumchlorhydratsilicat, Aluminiumchlorhydratsulfat, Polyaluminiumchlorsulfat, Polyaluminiumsilicatsulfat, Polyalumino-eisen(III)-sulfat, Polyaluminiumeisenhalogeniden oder basischer Polyaluminiumsulfat-Lösung, die zusätzliche mehrwertige Kationen aus der Gruppe von Calcium, Magnesium und Zink enthält, erhalten wird.

3. Verfahren gemäß Anspruch 2, wobei die Spezies als eine wässrige Lösung von Aluminiumchlorhydrat oder Polyaluminiumchlorid erhalten wird.

4. Verfahren gemäß Anspruch 3, wobei die Spezies ein Verhältnis von OH zu Metall von zwischen 2,3 und 2,7 hat.

5. Verfahren gemäß einem der vorangehenden Ansprüche, wobei das feste Substrat partikuläres Material ist, das eine Partikelgröße im Bereich von 50 bis 1200 µm hat.

6. Verfahren gemäß Anspruch 5, wobei wenigstens 80 % des partikulären Materials eine Partikelgröße im Bereich von 75 bis 250 µm haben.

7. Verfahren gemäß einem der vorangehenden Ansprüche, wobei das feste Substrat ein partikuläres Material ist, das aus Sand, Glas, Siliziumdioxid, Kohle, Aktivkohle, Diatomeenerde, Cellulose, Harzen, gewebtem und nicht-gewebtem Stoff, Aluminosilicaten, Ton und Zeolith ausgewählt ist.

8. Verfahren gemäß Anspruch 7, wobei das feste Substrat Aktivkohle ist.

9. Verfahren gemäß Anspruch 8, wobei das Filtermedium die Form eines Blocks hat, der das partikuläre Aktivkohlematerial mit einem Bindermaterial gebunden umfasst.

10. Verfahren gemäß Anspruch 9, wobei das Bindematerial ein Polymer ist, das aus Polyethylen, Polypropylen, Polyester, Harzen, Cellulose oder einem Gemisch davon ausgewählt ist.

11. Verfahren gemäß einem der vorangehenden Ansprüche, wobei die vorhydrolysierte positiv geladene mehrwertige metallische Spezies in einer Menge im Bereich von 2 bis 15 Gewichts-% des Filtermediums vorliegt.

12. Verfahren gemäß einem der vorangehenden Ansprüche, wobei das Filtermedium ein Biocid umfasst.

13. Verfahren gemäß Anspruch 12, wobei das Biocid aus Silber oder seinen Salzen, Polyethylenimin und quaternären Ammoniumsalzen ausgewählt ist.

14. Filtermedium, umfassend ein festes Substrat mit 1-20 Gewichts-% vorhydrolysierter positiv geladener mehrwertiger metallischer Spezies, die Aluminium ist, daran absorbiert, wobei die Spezies ein Verhältnis von OH zu Metall zwischen 0,5 und 3 hat, und das außerdem ein Biocid umfasst und wobei eine 1 %ige (G/V) wässrige Lösung der Spezies einen pH im Bereich von 4 bis 8 hat.

15. Filtermedium gemäß Anspruch 14 beansprucht ist, wobei das Biocid aus Silber oder seinen Salzen, Polyethylenimin und quaternären Ammoniumsalzen ausgewählt ist.

16. Filtermedium, gemäß Anspruch 14, wobei die quaternären Ammoniumsalze aus Polydiallyldimethylammoniumsalzen und Cetylpyridiniumchlorid ausgewählt sind.

17. Schwerkraft beschickte Wasserreinigungsvorrichtung, umfassend
- ein Sedimentfilter, das angepasst ist, partikuläres Material einer Partikelgröße von mehr als 3 Mikrometer abzutrennen, und
- ein Filtermedium gemäß Anspruch 14.

## Revendications

1. Procédé pour filtrer de l'eau, comprenant le passage de l'eau à travers un lit d'un milieu filtrant comprenant un substrat solide avec, absorbée sur celui-ci, 1 à 20 % en poids (par rapport au milieu filtrant) d'une espèce métallique multivalente chargée positivement et préhydrolysée, qui est l'aluminium, où ladite espèce a un rapport OH sur métal entre 0,5 et 3, et où une solution aqueuse à 1 % (w/v) de ladite espèce a un pH dans la plage de 4 à 8.

2. Procédé selon la revendication 1, dans lequel ladite espèce est obtenue à partir du chlorure de polyaluminium, chlorhydrate d'aluminium, sulfate de polyaluminium, silicate de chlorhydrate d'aluminium, sulfate de chlorhydrate d'aluminium, chlorosulfate de polyaluminium, sulfate de silicate de polyaluminium, sulfate polyalumino-ferrique, des halogénures de polyaluminium - fer ou d'une solution basique de sulfate de polyaluminium contenant des cations multivalents additionnels provenant du groupe du calcium, du magnésium et du zinc.

3. Procédé selon la revendication 2, dans lequel ladite espèce est obtenue sous forme d'une solution aqueuse de chlorhydrate d'aluminium ou de chlorure de polyaluminium.

4. Procédé selon la revendication 3, dans lequel ladite espèce a un rapport OH sur métal situé entre 2,3 et 2,7.

5. Procédé selon l'une quelconque des revendications précédentes, dans lequel le substrat solide est une matière particulaire qui a une granulométrie dans la plage allant de 50 à 1200 µm.

6. Procédé selon la revendication 5, dans lequel au moins 80 % de ladite matière particulaire a une granulométrie dans la plage de 75 à 250 µm.

7. Procédé selon l'une quelconque des revendications précédentes, dans lequel le substrat solide est une matière particulaire choisie parmi le sable, le verre, la silice, le charbon, le carbone activé, la terre de diatomée, la cellulose, les résines, les chiffons tissés et non tissés, les aluminosilicates, l'argile ou la zéolite.

8. Procédé selon la revendication 7, dans lequel le substrat solide est le carbone activé.

9. Procédé selon la revendication 8, dans lequel. le milieu filtrant a la forme d'un bloc comprenant la matière particulaire de carbone activé liée à une matière liante.

10. Procédé selon la revendication 9, dans lequel la matière liante est un polymère choisi parmi le polyéthylène, le polypropylène, le polyester, les résines, la cellulose ou un mélange de ceux-ci.

11. Procédé selon l'une quelconque des revendications précédentes, dans lequel l'espèce métallique multivalente chargée positivement et préhydrolysée est présente en une quantité située dans la plage de 2 à 15 % en poids du milieu filtrant.

12. Procédé selon l'une quelconque des revendications précédentes, dans lequel le milieu filtrant comprend un biocide.

13. Procédé selon la revendication 12, dans lequel le biocide est choisi parmi l'argent ou ses sels, la polyéthylène-imine et les sels d'ammonium quaternaire.

14. Milieu filtrant comprenant un substrat solide avec, absorbée sur celui-ci, 1 à 20 % en poids d'une espèce métallique multivalente chargée positivement et préhydrolysée, qui est l'aluminium, où ladite espèce a un rapport OH sur métal situé entre 0,5 et 3, et comprenant en plus un biocide, et dans lequel une solution aqueuse à 1 % (w/v) de ladite espèce a un pH situé dans la plage de 4 à 8.

15. Milieu filtrant selon la revendication 14, dans lequel le biocide est choisi parmi l'argent ou ses sels, la polyéthylène-imine et les sels d'ammonium quaternaires.

16. Milieu filtrant selon la revendication 14, dans lequel les sels d'ammonium quaternaire sont choisis parmi les sels de polydiallyldiméthyl-ammonium et le chlorure de cétyl-pyridinium.

17. Dispositif de purification de l'eau amenée par gravité, comprenant :
■ filtre à sédiments adapté pour séparer la matière particulaire, ayant une granulométrie supérieure à 3 microns et
■ un milieu filtrant selon la revendication 14.
